(19) Europäisches Patentamt
European Patent Office
Office européen des brevets

(11) **EP 4 279 964 A1**

(12) **EUROPEAN PATENT APPLICATION**

(43) Date of publication:
**22.11.2023 Bulletin 2023/47**

(21) Application number: **23173863.4**

(22) Date of filing: **17.05.2023**

(51) International Patent Classification (IPC):
*G02B 5/30* (2006.01)   *G02B 27/00* (2006.01)
*G02B 27/01* (2006.01)   *G02B 27/28* (2006.01)
*G06F 3/01* (2006.01)

(52) Cooperative Patent Classification (CPC):
**G02B 27/0172; G02B 5/30; G02B 27/0093;
G02B 27/283; G06F 3/013;** G02B 27/0081

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.05.2022 JP 2022082073**

(71) Applicant: **CANON KABUSHIKI KAISHA
Tokyo 146-8501 (JP)**

(72) Inventor: **TASHIRO, Yoshihisa
Tokyo, 146-8501 (JP)**

(74) Representative: **TBK
Bavariaring 4-6
80336 München (DE)**

(54) **OBSERVATION APPARATUS**

(57)    An observation apparatus is configured to enable an observer to observe an image displayed on an image display surface. The observation apparatus includes an observation optical system that includes a half-transmissive reflective surface, and a reflective polarizer (PBS) configured to transmit linearly polarized light in a first direction and to reflect linearly polarized light in a second direction orthogonal to the first direction, and an imaging optical system configured to guide light that has transmitted through the reflective polarizer to an image pickup apparatus (CAM) configured to image an observation side. A transmittance at a wavelength of 850 nm of linearly polarized light in the second direction of the reflective polarizer is 30% or higher.

FIG. 1A

**Description**

BACKGROUND

Technical Field

One of the aspects of the disclosure relates to an observation apparatus.

Description of Related Art

An observation apparatus has conventionally been known that provides a realistic experience by magnifying and displaying an original image displayed on an image display surface via an observation optical system and providing a large-screen image to the user. Japanese Domestic PCT Publication No. 2015-508182 discloses an observation apparatus that includes an observation optical system with a diagonal viewing angle of 46 degrees using a free-form surface prism and an imaging optical system that guides light from an observation surface to an image pickup apparatus that images the observation side.

In the observation apparatus disclosed in Japanese Domestic PCT Publication No. 2015-508182, an attempt to further expand the viewing angle of the observation optical system causes the free-form surface prism to be larger and the observation optical system to be thicker.

The observation optical system configured as a triple-pass optical system that folds the observation optical path on the optical axis using a reflective polarizer and a half-mirror can expand the viewing angle and achieve a thin configuration. In addition, a configuration (observation system through-the-lens (TTL) configuration) in which a part of the observation optical system serves as the imaging optical system can reduce the size of the observation apparatus. At this time, in capturing a corneal reflection (or reflex) image of the observer in order to detect the visual line of the observer, light that has transmitted through the reflective polarizer is guided to the image pickup apparatus.

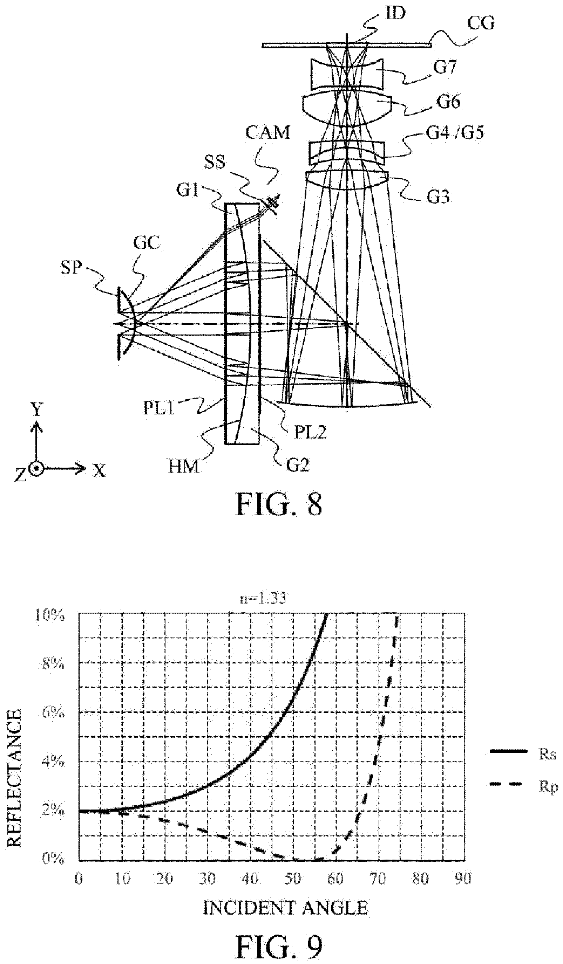

FIG. 9 illustrates the reflectance of S-polarized light and the reflectance of P-polarized light relative a light incident angle from air to a refractive index interface having a refractive index of 1.33 (corresponding to the refractive index of the cornea). The S-polarized light is a polarized light component orthogonal to a plane containing the light incident angle and reflection angle, and the P-polarized light is a polarized light component parallel to the plane containing the light incident angle and reflection angle. The reflected light from the cornea is biased to the S-polarized light in many incident angle regions. Therefore, in capturing a corneal reflection image using light that has passed through the reflective polarizer, the corneal reflection image is likely to extinct at the reflective polarizer depending on a transmission axis direction of the reflective polarizer and an arrangement of a light source and the image pickup apparatus.

SUMMARY

One of the aspects of the present disclosure provides an observation apparatus that can satisfactorily acquire a corneal reflection image.

The present invention in its first aspect provides an observation apparatus as specified in claims 1 to 14.

Further features of the disclosure will become apparent from the following description of embodiments with reference to the attached drawings.

BRIEF DESCRIPTION OF THE DRAWINGS

FIGs. 1A and 1B are sectional views of an observation apparatus according to one embodiment of the disclosure.
FIGs. 2A to 2C illustrate a corneal reflection optical path diagram and a corneal reflection image on an imaging surface in the observation apparatus according to this embodiment.
FIGs. 3A and 3B illustrate a corneal reflection optical path diagram and a corneal reflection image on an imaging surface in an observation apparatus according to a comparative example.
FIG. 4 is a sectional view of the observation apparatus according to Example 1.
FIG. 5 explains a configuration using polarization.
FIG. 6 is a sectional view of an observation apparatus according to Example 2.
FIG. 7 is a sectional view of an observation apparatus according to Example 3.
FIG. 8 is a sectional view of an observation apparatus according to Example 4.
FIG. 9 explains reflectance at a refractive index interface.

DESCRIPTION OF THE EMBODIMENTS

Referring now to the accompanying drawings, a detailed description will be given of embodiments according to the disclosure. Corresponding elements in respective figures will be designated by the same reference numerals, and a duplicate description thereof will be omitted.

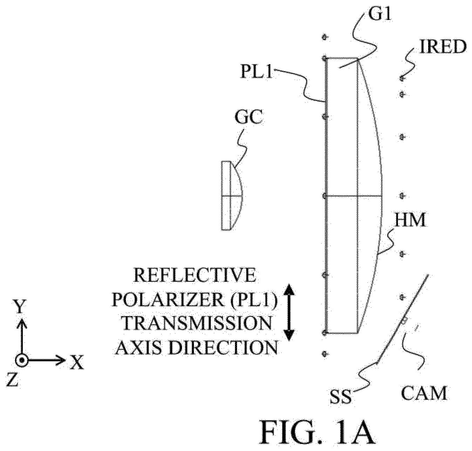

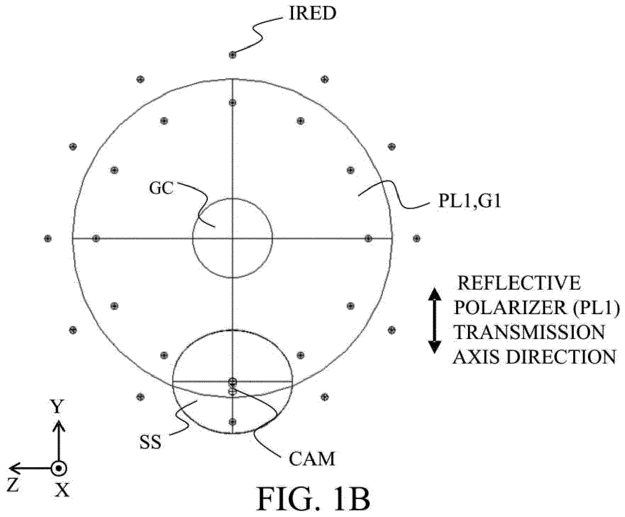

FIGs. 1A and 1B are a sectional view on a XY plane (XY sectional view) and a sectional view on a YZ plane (YZ sectional view), respectively, of an observation apparatus according to one embodiment of the disclosure. An X-axis direction is a direction parallel to a direction along an optical axis (optical axis direction) of a first lens G1, which will be described below. A Y-axis direction and a Z-axis direction are two orthogonal directions orthogonal to the X-axis direction. The observation apparatus includes an observation optical system configured to magnify and enable an observer to observe an image displayed on an image display surface of a display element, and is suitable for a head mount display (HMD) or the like. The observation apparatus may include light sources IRED configured to illuminate an observation surface (corneal reflection surface GC, pupil plane, exit pupil) side. The observation optical system includes a half-transmissive reflective element PL1 including a reflective polarizer configured to transmit linearly polarized light in a first direction and to reflect linearly polarized light in a second direction orthogonal to the first direction, a half-mirror having a half-transmissive reflective surface, and a first lens G1 as a convex lens. The observation optical system is a triple-pass optical system that folds the observation optical path on the optical axis using the reflective polarizer and the half-transmissive reflective surface. The observation optical system configured as the triple-pass optical system can provide the observation optical system with a thinner configuration and a wider viewing angle. A part of the observation optical system functions as the imaging optical system that guides light from the observation surface to an image pickup apparatus CAM. A configuration (observation system TTL configuration) in which the part of the observation optical system is used as the imaging optical system can reduce the size of the observation apparatus. The image pickup apparatus CAM captures an image of the observation side using light that has transmitted through the reflective polarizer. A diaphragm (aperture stop) SS is disposed on the observation side of the image pickup apparatus CAM. The light sources IRED are arranged in a circle around the observation optical system. Since each light source IRED functions as a light source for the corneal reflection image, a visual line can be detected based on the corneal reflection image. The corneal reflection surface GC is a surface modeled as a refractive index interface having a radius of curvature of -8 mm and a refractive index of 1.33. A distance on the optical axis from a surface on the observation side of the half-transmissive reflective element PL1 to a surface vertex of the corneal reflection surface GC is approximately 12 mm. A transmission axis direction (first direction) of the reflective polarizer is set to the Y-axis direction.

In this embodiment, the transmittance (to light at 0-degree incidence) of polarized light at a wavelength of 850 nm in a direction (second direction) orthogonal to the transmission axis of the reflective polarizer is 30% or higher. The reflective polarizer in this embodiment is, for example, IQP-E manufactured by 3M Company. The wavelength band of the observation optical system is a visible light region, and may include a wavelength band of 450 nm to 680 nm, which is a wavelength band to which the eye of the observer is highly sensitive. In order to efficiently use the observation optical system as the triple-pass optical system, the reflective polarizer is to have a configuration that possesses a high reflectance and a low transmittance (large extinction ratio) for polarized light in the direction orthogonal to the transmission axis in the visible light region. Light with a wavelength of 850 nm is near-infrared light to which the eye is little sensitive, and light in the wavelength band that is not used for an observation optical system. Since the wavelength range around 850 nm is a wavelength band to which an image sensor, such as a CMOS or CCD sensor, included in the image pickup apparatus CAM is sensitive, the light around the wavelength of 850 nm is suitable for imaging on the observation side (acquiring of an iris image and a corneal reflection image). Accordingly, this embodiment reduces an extinction ratio by increasing the transmittance at the wavelength of 850 nm of the polarized light in the direction orthogonal to the transmission axis of the reflective polarizer. That is, this embodiment intentionally lowers the function as the reflective polarizer in the near-infrared region.

The transmittance at the wavelength of 850 nm of the polarized light in the direction orthogonal to the transmission axis of the reflective polarizer may be 50% or higher or 70% or higher.

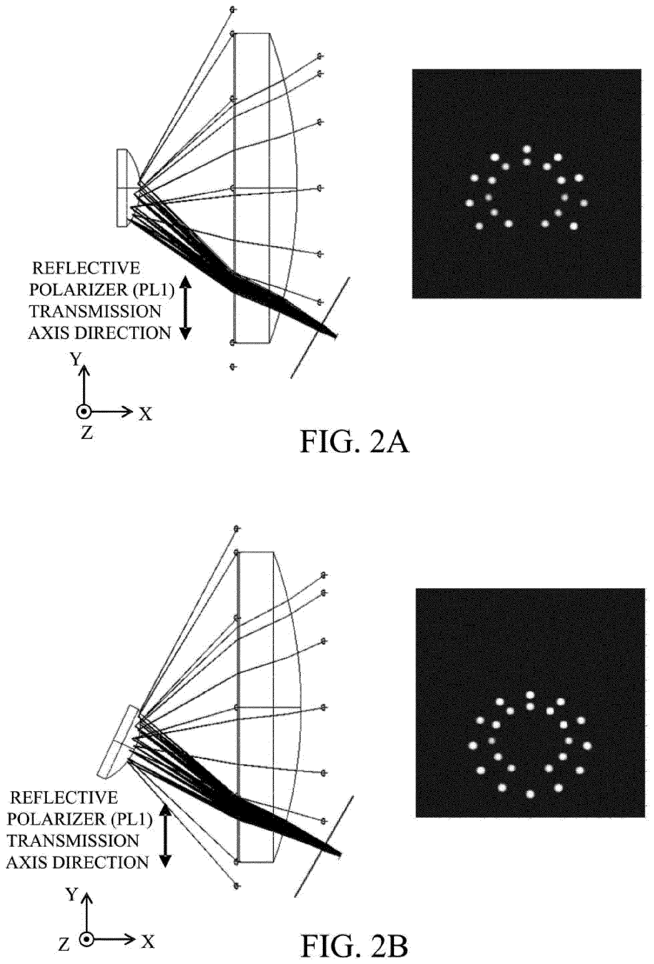

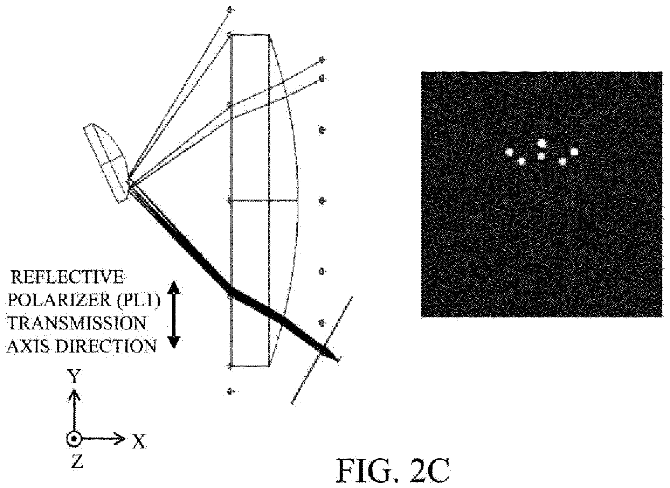

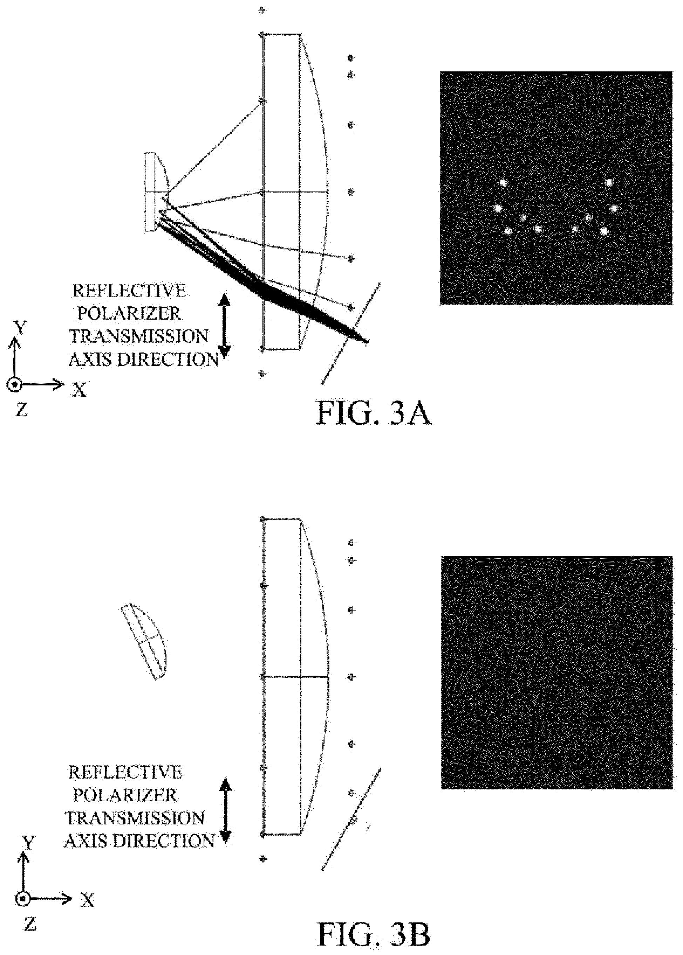

FIGs. 2A, 2B, and 2C illustrate a corneal reflection optical path and a corneal reflection image on the imaging surface of the image sensor included in image pickup apparatus CAM in a case where a corneal rotation angle about the Z-axis in the observation apparatus according to this embodiment are 0 degree, -20 degrees, and +20 degrees, respectively. FIGs. 3A and 3B respectively illustrate a corneal reflection optical path and a corneal reflection image on the imaging surface in a case where the corneal rotation angle about the Z-axis is 0 degree and +20 degrees in an observation apparatus in which the reflective polarizer is modeled as an ideal reflective polarizer having no wavelength dependency.

In the observation apparatus that includes the ideal reflective polarizer illustrated in FIGs. 3A and 3B, the corneal reflection light is biased to the S-polarized light, and the polarization direction of the S-polarized light is orthogonal to the transmission axis of the reflective polarizer, the corneal reflection image is likely to extinct. In particular, in a case where the corneal rotation angle is +20 degrees, all the corneal reflection images extinct and the visual line cannot be detected by the corneal reflection method. On the other hand, in the observation apparatus according to this embodiment that includes the reflective polarizer, the corneal reflection light can reach the imaging plane.

This configuration can realize an observation apparatus that can satisfactorily acquire a corneal reflection image.

The reflective polarizer may have a planar shape. Thereby, various manufacturing problems can be suppressed, such as internal stress that occurs in a case where the element is molded into a curved surface, and air bubbles contamination in an adhesive agent in pasting to the curved surface of the substrate.

The half-transmissive reflective surface may have a concave surface on the observation side. Distribution of the main power (reciprocal of the focal length) of the observation optical system with the half-transmissive reflective surface can realize a wide-field observation optical system without generating chromatic aberration.

The observation optical system may include a cemented lens. This configuration is more stable against relative lens tilt than a configuration in which each single lens is individually held in a mechanical lens barrel.

A cemented surface of the cemented lens may be a half-transmissive reflective surface. Thereby, the half-transmissive reflective surface can be protected from external environment changes such as moisture absorption and temperature changes.

The observation optical system may include a transmissive linear polarizer disposed on the image display surface side of the half-transmissive reflective surface. Thereby, a high-quality observation optical system can be realized using a configuration using polarization, which will be described below.

The transmittance (to light at 0-degree incidence) of the polarized light at the wavelength of 850 nm in a direction orthogonal to a transmission axis of the transmissive linear polarizer disposed on the image display surface side of the half-transmissive reflective surface may be 30% or higher. Thereby, sufficient light can be received even in a case where the image pickup apparatus receives light that has transmitted through the transmissive linear polarizer.

The observation optical system may include a transmissive linear polarizer disposed on the observation side of the reflective polarizer. The transmission axis direction of the transmissive linear polarizer and the transmission axis direction of the reflective polarizer may coincide with each other. Thereby, the transmissive linear polarizer can filter (cut) reflected light from the reflective polarizer which is derived from the external light incident from the observation side. Coincidence includes not only strict matching but also substantial matching (within a permissible range of $\pm 10$ degrees or less).

The transmittance (to light at 0-degree incidence) at the wavelength of 850 nm of polarized light in the direction orthogonal to the transmission axis of the transmissive linear polarizer disposed on the observation side of the reflective polarizer may be 30% or higher. Thereby, the polarization influence of the corneal reflection light can be reduced during imaging using light with a wavelength in the near-infrared region.

The transmittance at a wavelength of 850 nm of the polarized light in the direction orthogonal to the transmission axis of the transmissive linear polarizer disposed on the observation side may be 50% or higher or 70% or higher.

The light emitted from each light source IRED may be near-infrared light having an emission peak at a wavelength of 700 nm to 1200 nm. The wavelength range of 700 nm to 1200 nm is outside the visible light range and within a range to which the image sensor is sensitive, and can achieve an observation of a magnified image of the image display surface through the observation optical system and guidance of the light from the observation surface to the image pickup apparatus by the imaging optical system. A region on the short wavelength side of 700 nm or less is a region to which the eye is sensitive, and illumination light for imaging on the observation side interferes with observation of a virtual image on the image display surface. On the other hand, the sensitivity of the image sensor decreases in the long wavelength region of 1200 nm or higher.

The light emitted from each light source IRED may have an emission peak at a wavelength of 750 nm to 1100 nm or 800 nm to 1000 nm.

At least part of the light emitted from each light source IRED may transmit the reflective polarizer and illuminate the eyes of the observer. Thereby, the observation apparatus can be made smaller. At least part of the light emitted by the light source IRED may illuminate the eye of the observer without transmitting the reflective polarizer.

In FIGs. 1A, 1B, and 2A to 2C, the polarization transmission axis direction of the reflective polarizer is set parallel to the Y-axis, but the polarization transmission axis direction may be arbitrarily set.

EXAMPLE 1

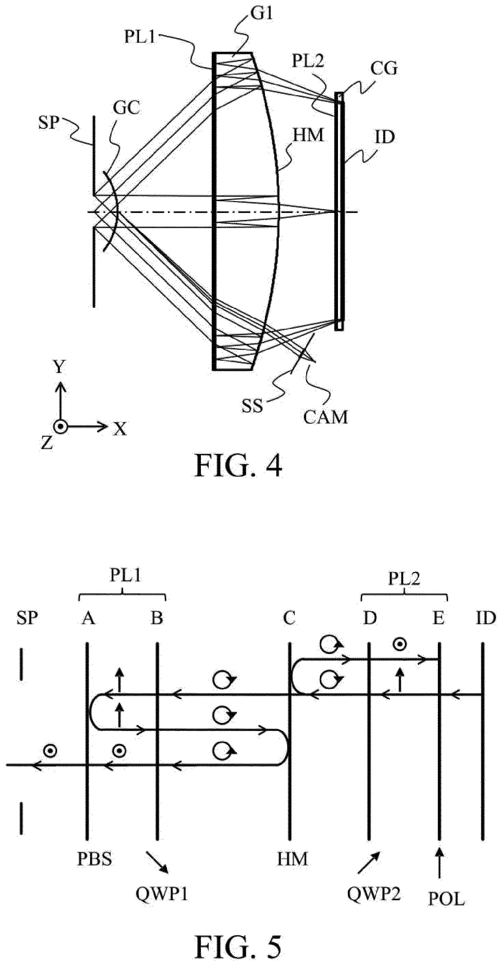

FIG. 4 is a sectional view of an observation apparatus according to this example. The observation apparatus according to this example includes an observation optical system that has a diagonal viewing angle of about 90 degrees and includes, in order from the observation side to the image display surface side, a half-transmissive reflective element PL1 including a reflective polarizer, a half-mirror HM having a half-transmissive reflective surface, and a display element ID. The half-mirror HM is formed on the first lens G1 as a convex lens. A cover glass CG is disposed on the observation side of the display element ID. The observation optical system is a coaxial optical system in which light from the display element ID transmits through the half-mirror HM, is reflected on the half-transmissive reflective element PL1, is reflected by the half-mirror HM, transmits through the half-transmissive reflective element PL1, and is guided to a pupil plane SP. The triple-pass optical system configured as the observation optical system can achieve both a wider viewing angle and a thinner profile of the observation apparatus. A transmissive element PL2 having a linear polarizer disposed on the image display surface side of the half-mirror HM can form a configuration that utilizes polarization and shield unnecessary light that transmits through the observation optical system in a single pass.

The observation apparatus according to this example includes an image pickup apparatus CAM that captures the observation side using light that has transmitted through the reflective polarizer, and the light source that illuminates the observation side. The transmittance at a wavelength of 850 nm of the polarized light in the direction orthogonal to the transmission axis of the reflective polarizer is 30% or higher, and emitting near-infrared light from the light source can efficiently guide the reflected light from a corneal reflection surface GC to the image pickup apparatus CAM.

Part of the imaging optical system according to this example functions as the observation optical system, and light from the observation side transmits through the half-transmissive reflective element PL1 and the half-mirror HM and is guided to the image pickup apparatus CAM. Thereby, the imaging angle on the observation side can be reduced, and the trapezoidal distortion can be alleviated.

A description will now be given of a configuration utilizing polarization. FIG. 5 explains the configuration utilizing the polarization. The observation optical system according to this example includes a reflective polarizer PBS (A), a first quarter waveplate QWP1 (B), a half-mirror HM (C), a second quarter waveplate QWP2 (D), and a linear polarizer POL (E). A half-transmissive reflective element PL1 includes the reflective polarizer PBS and the first quarter waveplate QWP1. A transmissive element PL2 includes the second quarter waveplate QWP2 and the linear polarizer POL.

The reflective polarizer PBS is an element, such as a wire grid polarizer, configured to reflect linearly polarized light polarized in a direction passing through the linear polarizer POL and to transmit linearly polarized light polarized in a direction orthogonal to the direction passing through the linear polarizer POL. For example, in a case where the reflective polarizer PBS is the wire grid polarizer, a wire grid forming surface formed on the reflective polarizer PBS functions as the half-transmissive reflective surface. The first quarter waveplate QWP1 and the second quarter waveplate QWP2 are disposed while their slow axes tilt by 90 degrees. The first quarter waveplate QWP1 is disposed while its slow axis tilts by 45 degrees relative to the polarization transmission axis of the linear polarizer POL. The half-mirror HM has a half-transmissive reflective surface formed, for example, by a dielectric multilayer film or metal vapor deposition.

The light from the image display surface is converted into linearly polarized light by the linear polarizer POL, is converted into circularly polarized light by the second quarter waveplate QWP2, and enters the half-mirror HM. Part of the light incident on the half-mirror HM is reflected and becomes reversely rotating, circularly polarized light and returns to the second quarter waveplate QWP2. The reversely rotating, circularly polarized light returning to the second quarter waveplate QWP2 is converted into linearly polarized light by the second quarter waveplate QWP2, which is polarized in a direction orthogonal to the direction in which it originally passed through the linear polarizer POL, returns to the linear polarizer POL, and is absorbed by the linear polarizer POL.

On the other hand, part of the light incident on the half-mirror HM transmits through it, is converted into linearly polarized light by the first quarter waveplate QWP1, which is polarized in the direction in which it passed through the linear polarizer POL, and enters the reflective polarizer PBS. Due to the polarization selectivity of the reflective polarizer PBS, linearly polarized light polarized in the direction in which it passed through the linear polarizer POL is reflected. The light reflected by the reflective polarizer PBS is converted by the first quarter waveplate QWP1 into circularly polarized light in a rotating direction reversely to that in which it was first converted into the circularly polarized light by the second quarter waveplate QWP2, and enters the half-mirror HM. The light reflected by the half-mirror HM becomes circularly polarized light in a rotating direction reversely to that of the pre-reflection light, enters the first quarter waveplate QWP1, is converted into linearly polarized light polarized in a direction orthogonal to the direction in which it first passed through the linear polarizer POL, and enters the reflective polarizer PBS. Due to the polarization selectivity of the reflective polarizer PBS, the linearly polarized light polarized in the direction orthogonal to the direction in which it passed through the linear polarizer POL transmits through the reflective polarizer PBS and is guided to the pupil plane SP.

The above configuration can guide to the pupil plane SP the light that has transmitted through the half-mirror HM, been reflected by the reflective polarizer PBS, been deflected by the half-mirror HM, and transmitted through the reflective polarizer PBS.

EXAMPLE 2

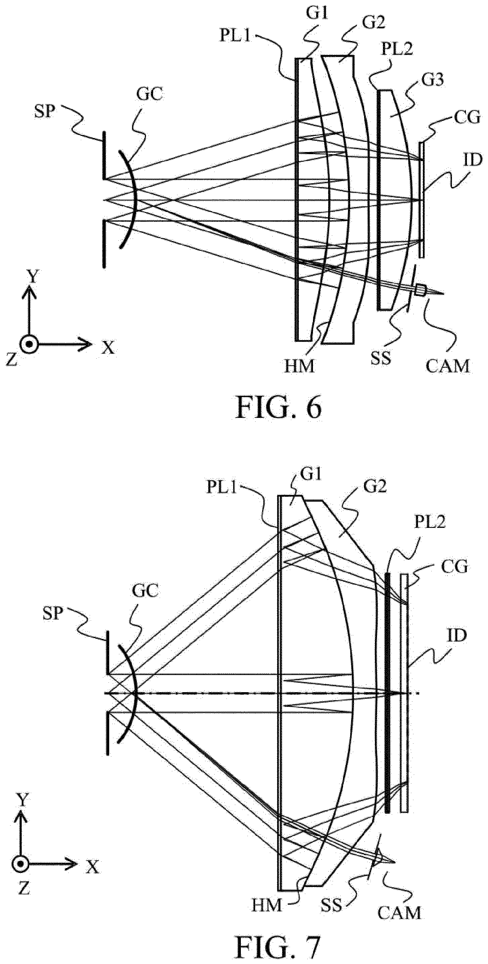

FIG. 6 is a sectional view of an observation apparatus according to this example. Although the basic configuration of the observation apparatus according to this embodiment is similar to that of the observation apparatus according to Example 1, this embodiment changes the configuration of the observation optical system and the arrangement of the imaging optical system.

The observation apparatus according to this example includes a second lens G2 and a third lens G3 in addition to the configuration of the observation optical system according to Example 1, and an observation optical system having a diagonal viewing angle of about 58 degrees. A half-mirror HM is formed on the second lens G2. A display element ID has an aspect ratio of 4:3, and the XY section is a plane including the short sides of the display element ID of the observation optical system.

Apart of the imaging optical system according to this embodiment functions as the observation optical system, and the light from the observation side transmits through the half-transmissive reflective element PL1 including the reflective polarizer, the half-mirror HM, and the transmissive element PL2 including the linear polarizer, and is guided to the image pickup apparatus CAM for imaging the observation side.

EXAMPLE 3

FIG. 7 is a sectional view of an observation apparatus according to this example. Although the basic configuration of the observation apparatus according to this embodiment is similar to that of the observation apparatus according to Example 1, this embodiment changes the configuration of the observation optical system and the arrangement of the imaging optical system.

The observation apparatus according to this embodiment includes an observation optical system that has a diagonal viewing angle of about 80 degrees, and includes a cemented lens consisting of a first lens G1 and a second lens G2.

Apart of the imaging optical system according to this embodiment functions as the observation optical system, and light from the observation side transmits through the half-transmissive reflective element PL1 including the reflective polarizer, the half-mirror HM, and an area outside an effective area of the observation optical system of a surface on the image display surface side of the second lens G2, and is guided to the image pickup apparatus CAM that captures the observation side. The generation of astigmatism can be reduced by making planar an area outside the effective area of the observation optical system and within an effective area of an imaging light beam.

EXAMPLE 4

FIG. 8 is a sectional view of an observation apparatus according to this example. Although the basic configuration of the observation apparatus according to this embodiment is similar to that of the observation apparatus according to Example 1, this embodiment changes the configuration of the observation optical system and the arrangement of the imaging optical system.

The observation apparatus according to this example includes, in addition to the configuration of the observation optical system of Example 1, second to seventh lenses G2 to G7, and an observation optical system that forms an intermediate image with a diagonal viewing angle of about 69 degrees. The display element ID has an aspect ratio of 4:3, and the XY section is a plane including the short sides of the display element ID of the observation optical system.

The observation optical system according to this embodiment includes a parallel plate as a cemented lens consisting of the first lens G1 and the second lens G2 that are made of the same material while an air interface is a plane. Here, a half-transmissive reflective element PL1 including a reflective polarizer and a quarter waveplate is disposed on the observation side of the first lens G1, and a cemented surface of the cemented lens is the half-mirror HM. A transmissive element PL2 including a quarter waveplate and a linear polarizer is disposed on the image display surface side of the second lens G2. A reflective surface (ninth surface) is disposed as a planar combiner that includes a second reflective polarizer. Thereby, a so-called optical see-through type observation optical system can be realized in which external light passes through the cemented lens according to this embodiment in a single pass and is observed at approximately the same size, and image light of the display element IP passes through the cemented lens according to this embodiment in a triple pass and is magnified and observed.

Apart of the imaging optical system according to this embodiment functions as the observation optical system, and light from the observation side transmits through the half-transmissive reflective element PL1 including the reflective polarizer, the half-mirror HM, and a surface on the image display surface side of the second lens G2, and is guided to the image pickup apparatus CAM that images the observation side.

A description will now be given of numerical examples 1 to 4 corresponding to Examples 1 to 4.

In surface data in each numerical example, r represents a radius of curvature of each optical surface, and d (mm) represents an on-axis distance (distance on the optical axis) between an m-th surface and an (m+1)-th surface, where m is a surface number counted from the light incident side. nd denotes a refractive index of a material of an optical element having each surface for the d-line. vd is an Abbe number of the material of the optical element having each surface based on the d-line. The Abbe number vd of a certain material is expressed as follows:

$$vd = (Nd-1)/(NF-NC)$$

where Nd, NF, and NC are refractive indexes based on the d-line (587.6 nm), F-line (486.1 nm), and C-line (656.3 nm) in the Fraunhofer line, respectively. The overall lens length is a distance on the optical axis from the lens surface closest to the object to the image display plane. G (in G) means a plane glass for protecting the image display element. Each of the overall lens length (in G) and BF (in G) means a distance on the optical axis including the plane glass.

An asterisk * is attached to a surface number in a case where the surface has an aspherical shape. The aspherical shape is expressed as follows:

$$x=(h^2/R)/[1+\{1-(1+K)(h/R)^2\}]^{1/2}+A4\times h^4+A6\times h^6+A8\times h^8+A10\times h^{10}$$

where x is a displacement amount from a surface vertex in the optical axis direction, h is a height from the optical axis in a direction orthogonal to the optical axis, a light traveling direction is set positive, R is a paraxial radius of curvature, K is a conical constant, A4, A6, A8, and A10 are aspherical coefficients. "e±M" in the conical constant means $\times 10^{\pm M}$.

NUMERICAL EXAMPLE 1

UNIT: mm

Surface Data

| Surface No. | r | d | nd | vd | Effective Diameter |
|---|---|---|---|---|---|
| 1 (diaphragm) | ∞ | 15.00 | | | 4.00 |
| 2 | ∞ | 0.20 | 1.62000 | 55.0 | 40.00 |
| 3 | ∞ | 8.00 | 1.48749 | 70.2 | 40.00 |
| 4* | -57.436 | -8.00 | (reflective surface) | | 40.00 |
| 5 | ∞ | 8.00 | (reflective surface) | | 40.00 |
| 6* | -57.436 | 7.39 | | | 40.00 |
| 7 | ∞ | 0.20 | 1.62000 | 55.0 | 30.00 |
| 8 | ∞ | 0.70 | 1.51633 | 64.1 | 30.00 |
| 9 | ∞ | 0.00 | | | 30.00 |
| image plane | ∞ | | | | |

ASPHERIC DATA

4th Surface

$$K =-1.00000e+00\ A4= 4.50466e-07$$

6th Surface

$$K =-1.00000e+00\ A4= 4.50466e-07$$

Various Data

| | |
|---|---|
| Focal Length | 18.00 |
| Pupil Diameter | 4.00 |
| Viewing Angle | 45.00 |
| Overall Lens Length | 47.49 |
| BF (in G) | 16.49 |

Fixed Focal Length Lens Data

| Lens | Starting Surface | Focal Length |
|---|---|---|
| SP | 1 | 0.00 |
| PL1 | 2 | 0.00 |
| G1 | 3 | 117.82 |
| PL2 | 7 | 0.00 |
| CG | 8 | 0.00 |

NUMERICAL EXAMPLE 2

UNIT: mm

Surface Data

| Surface No. | r | d | nd | vd | Effective Diameter (Y,Z) |
|---|---|---|---|---|---|
| 1(diaphragm) | ∞ | 18.00 | | | 4.0 |
| 2 | ∞ | 0.20 | 1.50000 | 50.0 | 27.5 |
| 3 | ∞ | 3.00 | 1.53000 | 55.9 | 27.5 |
| 4* | -38.483 | 1.87 | | | 27.5 |
| 5 | -38.005 | -1.87 | (reflective surface) | | 27.5 |
| 6* | -38.483 | -3.00 | 1.53000 | 55.9 | 27.5 |
| 7 | ∞ | 3.00 | (reflective surface) | | 27.5 |
| 8* | -38.483 | 1.87 | | | 27.5 |
| 9 | -38.005 | 1.83 | 1.63600 | 23.9 | 27.5 |
| 10* | 99.896 | 0.85 | | | 23.5 |
| 11 | ∞ | 0.20 | 1.50000 | 50.0 | 21.0 |
| 12 | ∞ | 3.00 | 1.48749 | 70.2 | 21.0 |
| 13 | -30.050 | 0.76 | | | 21.0 |
| 14 | ∞ | 0.40 | 1.51633 | 64.1 | (8.2,11.0) |
| 15 | ∞ | 0.00 | | | (8.2,11.0) |
| image plane | ∞ | | | | |

ASPHERIC DATA

4th Surface

$$K = 0.00000e+00 \ A4= 1.14783e-05 \ A6= 8.12048e-08 \ A8=-3.42503e-10$$

$$A10= 1.00372e-12$$

6th Surface

$$K = 0.00000e+00 \ A4= 1.14783e-05 \ A6= 8.12048e-08 \ A8=-3.42503e-10$$

$$A10= 1.00372e-12$$

8th Surface

$$K = 0.00000e+00 \quad A4= 1.14783e-05 \quad A6= 8.12048e-08 \quad A8=-3.42503e-10$$

$$A10= 1.00372e-12$$

10th Surface

$$K = 0.00000e+00 \quad A4=-2.17485e-04 \quad A6= 1.14074e-06 \quad A8=-3.03928e-09$$

$$A10= 2.89322e-12$$

Various Data

| | |
|---|---|
| Focal Length | 12.97 |
| Pupil Diameter | 4.00 |
| Viewing Angle (Panel Short-Side Direction) | 17.20 |
| Overall Lens Length (in G) | 12.11 |

Fixed Focal Length Lens Data

| Lens | Starting Surface | Focal Length |
|---|---|---|
| SP | 1 | 0.00 |
| PL1 | 2 | 0.00 |
| G1 | 3 | 72.61 |
| G2 | 9 | -43.07 |
| PL2 | 11 | 0.00 |
| G3 | 12 | 61.64 |
| CG | 14 | 0.00 |

NUMERICAL EXAMPLE 3

UNIT: mm

Surface Data

| Surface No. | r | d | nd | vd | Effective Diameter |
|---|---|---|---|---|---|
| 1 (diaphragm) | ∞ | 18.00 | | | 4.0 |
| 2 | ∞ | 0.20 | 1.50000 | 50.0 | 38.0 |
| 3 | ∞ | 7.00 | 1.53000 | 55.9 | 38.0 |
| 4* | -41.951 | -7.00 | (reflective surface) | | 38.0 |
| 5 | ∞ | 7.00 | (reflective surface) | | 38.0 |
| 6* | -41.951 | 2.40 | 1.63600 | 23.9 | 38.0 |
| 7* | -73.131 | 0.95 | | | 27.0 |
| 8 | ∞ | 0.30 | 1.50000 | 50.0 | 30.0 |
| 9 | ∞ | 0.30 | 1.50000 | 50.0 | 30.0 |
| 10 | ∞ | 1.25 | | | 30.0 |
| 11 | ∞ | 0.70 | 1.51633 | 64.1 | 30.0 |
| 12 | ∞ | 0.00 | | | 30.0 |
| image plane | ∞ | | | | |

ASPHERIC DATA

4th Surface

$$K = 0.00000e+00 \quad A4=-2.58220e-06 \quad A6= 1.47199e-08 \quad A8=-5.32418e-11$$

$$A10= 7.50680e-14$$

6th Surface

$$K = 0.00000e+00 \quad A4=-2.58220e-06 \quad A6= 1.47199e-08 \quad A8=-5.32418e-11$$

$$A10= 7.50680e-14$$

7th Surface

$$K = 0.00000e+00 \quad A4= 1.82030e-04 \quad A6=-1.33313e-06 \quad A8= 2.80530e-09$$

Various Data

| | |
|---|---|
| Focal Length | 13.50 |
| Pupil Diameter | 4.00 |
| Viewing Angle | 40.00 |
| Overall Lens Length (in G) | 13.10 |

Fixed Focal Length Lens Data

| Lens | Starting Surface | Focal Length |
|---|---|---|
| SP | 1 | 0.00 |
| PL1 | 2 | 0.00 |
| G1 | 3 | 79.15 |
| G2 | 6 - | 159.48 |
| PL2 | 8 | 0.00 |
| PL2 | 9 | 0.00 |
| CG | 11 | 0.00 |

NUMERICAL EXAMPLE 4

UNIT: mm
Surface Data

| Surface No. | r | d | nd | vd | Effective Diameter (Y,Z) |
|---|---|---|---|---|---|
| 1 (diaphragm) | ∞ | 19.00 | | | 4.0 |
| 2 | ∞ | 0.20 | 1.50000 | 50.0 | 43.0 |
| 3 | ∞ | 4.38 | 1.54400 | 56.0 | 43.0 |
| 4* | -80.834 | -4.38 | (reflective surface) | | 43.0 |
| 5 | ∞ | 4.38 | (reflective surface) | | 43.0 |
| 6* | -80.834 | 1.50 | 1.54400 | 56.0 | 43.0 |
| 7 | ∞ | 0.20 | 1.50000 | 50.0 | (32.0,43.0) |
| 8 | ∞ | 15.47 | | | (32.0,43.0) |

(continued)

| Surface No. | r | d | nd | vd | Effective Diameter (Y,Z) |
|---|---|---|---|---|---|
| 9 | ∞ | -14.80 | (reflective surface) | | (21.0,17.0) |
| 10 | 98.671 | 38.80 | (reflective surface) | | (12.0,15.0) |
| 11 | 16.049 | 3.47 | 1.95375 | 32.3 | 14.5 |
| 12 | -69.698 | 2.09 | | | 14.0 |
| 13 | -19.195 | 2.01 | 1.85150 | 40.8 | 12.7 |
| 14 | -11.340 | 1.20 | 1.95906 | 17.5 | 12.5 |
| 15 | -65.988 | 2.59 | | | 13.4 |
| 16 | 12.157 | 6.50 | 1.65160 | 58.5 | 15.7 |
| 17 | -23.061 | 0.66 | | | 14.7 |
| 18* | 63.474 | 3.50 | 1.63600 | 23.9 | 12.8 |
| 19* | 20.422 | 3.55 | | | 12.1 |
| 20 | ∞ | 0.70 | 1.51633 | 64.1 | 13.7 |
| 21 | ∞ | 0.00 | | | 13.7 |
| image plane | ∞ | | | | |

ASPHERIC DATA

4th Surface

$$K = 0.00000e+00 \ A4= 7.33649e\text{-}07 \ A6=\text{-}1.66877e\text{-}09 \ A8= 5.28772e\text{-}12$$

$$A10=\text{-}5.05759e\text{-}15$$

6th Surface

$$K = 0.00000e+00 \ A4= 7.33649e\text{-}07 \ A6=\text{-}1.66877e\text{-}09 \ A8= 5.28772e\text{-}12$$

$$A10=\text{-}5.05759e\text{-}15$$

18th Surface

$$K = 0.00000e+00 \ A4=\text{-}5.74635e\text{-}04$$

19th Surface

$$K = 0.00000e+00 \ A4= 5.49158e\text{-}05 \ A6= 6.48873e\text{-}06$$

Various Data

| | |
|---|---|
| Focal Length | -9.05 |
| Pupil Diameter | 4.00 |
| Viewing Angle (Panel Short-Side Direction) | 22.90 |
| Overall Lens Length (in G) | 129.38 |

Fixed Focal Length Lens Data

| Lens | Starting Surface | Focal Length |
|------|------------------|--------------|
| SP | 1 | 0.00 |
| PL1 | 2 | 0.00 |
| G1 | 3 | 148.59 |
| G2 | 6 | 148.59 |
| PL2 | 7 | 0.00 |
| G3 | 11 | 13.95 |
| G4 | 13 | 29.12 |
| G5 | 14 | -14.43 |
| G6 | 16 | 13.18 |
| G7 | 18 | -48.89 |
| CG | 20 | 0.00 |

Each example can provide an observation apparatus that can acquire satisfactorily a corneal reflection image.

While the disclosure has been described with reference to embodiments, it is to be understood that the disclosure is not limited to the disclosed embodiments. The scope of the following claims is to be accorded the broadest interpretation so as to encompass all such modifications and equivalent structures and functions.

An observation apparatus is configured to enable an observer to observe an image displayed on an image display surface. The observation apparatus includes an observation optical system that includes a half-transmissive reflective surface, and a reflective polarizer (PBS) configured to transmit linearly polarized light in a first direction and to reflect linearly polarized light in a second direction orthogonal to the first direction, and an imaging optical system configured to guide light that has transmitted through the reflective polarizer to an image pickup apparatus (CAM) configured to image an observation side. A transmittance at a wavelength of 850 nm of linearly polarized light in the second direction of the reflective polarizer is 30% or higher.

## Claims

1. An observation apparatus configured to enable an observer to observe an image displayed on an image display surface, the observation apparatus comprising:

   an observation optical system that includes a half-transmissive reflective surface, and a reflective polarizer (PBS) configured to transmit linearly polarized light in a first direction and to reflect linearly polarized light in a second direction orthogonal to the first direction; and
   an imaging optical system configured to guide light that has transmitted through the reflective polarizer to an image pickup apparatus (CAM) configured to image an observation side,
   wherein a transmittance at a wavelength of 850 nm of linearly polarized light in the second direction the reflective polarizer is 30% or higher.

2. The observation apparatus according to claim 1, **characterized in that** the reflective polarizer has a planar shape.

3. The observation apparatus according to claim 1 or 2, **characterized in that** the half-transmissive reflective surface has a concave surface on the observation side.

4. The observation apparatus according to claim 1 or 2, **characterized in that** the observation optical system includes a cemented lens.

5. The observation apparatus according to claim 4, **characterized in that** a cemented surface of the cemented lens is the half-transmissive reflective surface.

6. The observation apparatus according to claim 1 or 2, **characterized in that** the observation optical system includes a transmissive linear polarizer disposed on an image display surface side of the half-transmissive reflective surface

7. The observation apparatus according to claim 6, **characterized in that** a transmittance at the wavelength of 850 nm of the linearly polarized light in the second direction of the transmissive linear polarizer is 30% or higher.

8. The observation apparatus according to claim 1 or 2, **characterized in that** the observation optical system further includes a transmissive linear polarizer disposed on the observation side of the reflective polarizer.

9. The observation apparatus according to claim 8, **characterized in that** a transmission axis direction of the transmissive linear polarizer and the first direction coincide with each other.

10. The observation apparatus according to claim 8, **characterized in that** a transmittance at the wavelength of 850 nm of the linearly polarized light in the second direction of the transmissive linear polarizer is 30% or higher.

11. The observation apparatus according to claim 1, further comprising a light source configured to illuminate the observation side.

12. The observation apparatus according to claim 11, **characterized in that** the light emitted from the light source is near-infrared light having an emission peak at a wavelength of 700 nm to 1200 nm.

13. The observation apparatus according to claim 11, **characterized in that** at least part of the light emitted from the light source passes through the reflective polarizer and illuminates an eyes of an observer.

14. The observation apparatus according to claim 13, **characterized in that** at least part of the light emitted by the light source illuminates the eye of the observer without passing through the reflective polarizer.

G1

IRED

PL1

GC

HM

REFLECTIVE
POLARIZER (PL1)
TRANSMISSION
AXIS DIRECTION

Y

Z →X

SS CAM

# FIG. 1A

FIG. 1B

REFLECTIVE
POLARIZER (PL1)
TRANSMISSION
AXIS DIRECTION

FIG. 2A

REFLECTIVE
POLARIZER (PL1)
TRANSMISSION
AXIS DIRECTION

FIG. 2B

REFLECTIVE
POLARIZER (PL1)
TRANSMISSION
AXIS DIRECTION

FIG. 2C

REFLECTIVE
POLARIZER
TRANSMISSION
AXIS DIRECTION

Y
Z
X

FIG. 3A

REFLECTIVE
POLARIZER
TRANSMISSION
AXIS DIRECTION

Y
Z
X

FIG. 3B

FIG. 4

FIG. 5

FIG. 6

FIG. 7

FIG. 8

n=1.33

FIG. 9

## EUROPEAN SEARCH REPORT

Europäisches
Patentamt
European
Patent Office
Office européen
des brevets

**Application Number**

EP 23 17 3863

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/239146 A1 (BIERHUIZEN SERGE [US] ET AL) 23 August 2018 (2018-08-23) * par. 139 and fig. 9; par. 139; fig. 9 and par. 139 and 142; fig. 9 and par. 139; fig. 19B and pqr. 198; fig. 9, par. 139 and 132; par. 142 and fig. 9; par. 147 and fig. 10; fig. 9; par. 150; par. 147; par. 148 and 150 * ----- | 1-14 | INV. G02B5/30 G02B27/00 G02B27/01 G02B27/28 G06F3/01 |
| T | Anonymous: "Infrarot-LED", , 2 April 2021 (2021-04-02), pages 1-2, XP93092099, Retrieved from the Internet: URL:https://de.wikipedia.org/w/index.php?title=Infrarot-LED&oldid=210482237 [retrieved on 2023-10-16] * p. 1, third paragraph * ----- | 12 | |

**TECHNICAL FIELDS SEARCHED (IPC)**

G02B

The present search report has been drawn up for all claims

| Place of search | Date of completion of the search | Examiner |
|---|---|---|
| Munich | 16 October 2023 | Thieme, Markus |

EPO FORM 1503 03.82 (P04C01)

**EP 4 279 964 A1**

## ANNEX TO THE EUROPEAN SEARCH REPORT
## ON EUROPEAN PATENT APPLICATION NO.

EP 23 17 3863

16-10-2023

| Patent document cited in search report | | Publication date | Patent family member(s) | | Publication date |
|---|---|---|---|---|---|
| US 2018239146 | A1 | 23-08-2018 | CN | 110168428 A | 23-08-2019 |
| | | | CN | 113589526 A | 02-11-2021 |
| | | | EP | 3586185 A1 | 01-01-2020 |
| | | | JP | 6874143 B2 | 19-05-2021 |
| | | | JP | 2020507123 A | 05-03-2020 |
| | | | KR | 20190104424 A | 09-09-2019 |
| | | | KR | 20210045519 A | 26-04-2021 |
| | | | US | 2018239146 A1 | 23-08-2018 |
| | | | US | 2020124857 A1 | 23-04-2020 |
| | | | WO | 2018156941 A1 | 30-08-2018 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015508182 W